# EUROPEAN PATENT APPLICATION

(11) **EP 4 491 407 A1**
(43) Date of publication of application: **15.01.2025**
(21) Application number: 24187304.1
(22) Date of filing: 09.07.2024
(51) Int. Cl.: B41J 3/407, B41J 11/00

(54) **PRINTING CONTROL APPARATUS, PRINTING CONTROL METHOD, AND PROGRAM**

(30) Priority: 12.07.2023 JP 2023114132
(71) Applicant: RISO KAGAKU CORPORATION, Tokyo 108-8385 (JP)
(72) Inventor: HIGUCHI, Takeshi, Tokyo, 108-8385 (JP)
(74) Representative: Winter, Brandl - Partnerschaft mbB

(57) **Abstract**

A printing control apparatus (1) includes: a strength reduction state discrimination unit (11) that discriminates a strength reduction state of a packaging material (P) attributed to printing based on the amount of ink used by a printing unit (111) for the printing on the packaging material (P); and a printing-related processing control unit (12) that performs printing-related processing related to the printing on the packaging material (P) based on the strength reduction state.

## Description

### BACKGROUND OF THE INVENTION

### 1. TECHNICAL FIELD

The present invention relates to a printing control apparatus, a printing control method, and a program.

### 2. DESCRIPTION OF THE RELATED ART

Conventionally, a droplet ejection apparatus has been proposed that calculates the degree of curl based on the amount of liquid or the like to accurately predict the degree of curl of a recording medium that occurs due to the ejection of the liquid (see, for example, JP 2012-158062 A).

### SUMMARY OF THE INVENTION

When printing is performed on a packaging material such as a cardboard box using ink such as water-based ink, the ink penetrates into the packaging material, reducing the strength of the packaging material. For example, in a case where the packaging material is a cardboard box, when moisture adheres to a bonding portion or the like between a center core formed in a corrugated shape and a liner disposed on front and back surfaces of the center core and spreading in a planar shape, the bonding portion is peeled off, thus reducing the strength of the packaging material. When the strength of the packaging material is reduced, the packaging material may be crushed to cause damage or contamination of the content stored in the packaging material, or the packaging material stacked on the crushed packaging material may fall to cause damage or contamination of the content.

An object of the present invention is to provide a printing control apparatus, a printing control method, and a program capable of coping with a reduction in strength of the packaging material attributed to printing using ink.

In one aspect, a printing control apparatus includes: a strength reduction state discrimination unit that discriminates a strength reduction state of a packaging material attributed to printing based on the amount of ink used by a printing unit for printing on the packaging material; and a printing-related processing control unit that performs printing-related processing related to the printing on the packaging material based on the strength reduction state.

According to the above aspect, it is possible to cope with a reduction in strength of the packaging material attributed to printing using ink.

### BRIEF DESCRIPTION OF THE DRAWINGS

FIG. 1 is a block diagram illustrating a configuration of a printing system including a printing control apparatus according to one embodiment;
FIG. 2 is a perspective view for explaining printing on a packaging material in the one embodiment;
FIG. 3 is an example of correspondence relation information representing a correspondence relation between the amount of ink used and a strength reduction state, and between the type of packaging material and the strength reduction state in the one embodiment;
FIG. 4 is a flowchart for explaining a printing control method according to the one embodiment;
FIGS. 5A to 5E are explanatory views for explaining changing a printing content in the one embodiment;
FIG. 6 is a flowchart for explaining a printing control method according to a first modification of the one embodiment; and
FIG. 7 is a flowchart for explaining a printing control method according to a second modification of the one embodiment.

### DETAILED DESCRIPTION

Hereinafter, a printing control apparatus, a printing control method, and a program according to one embodiment of the present invention will be described with reference to the drawings.

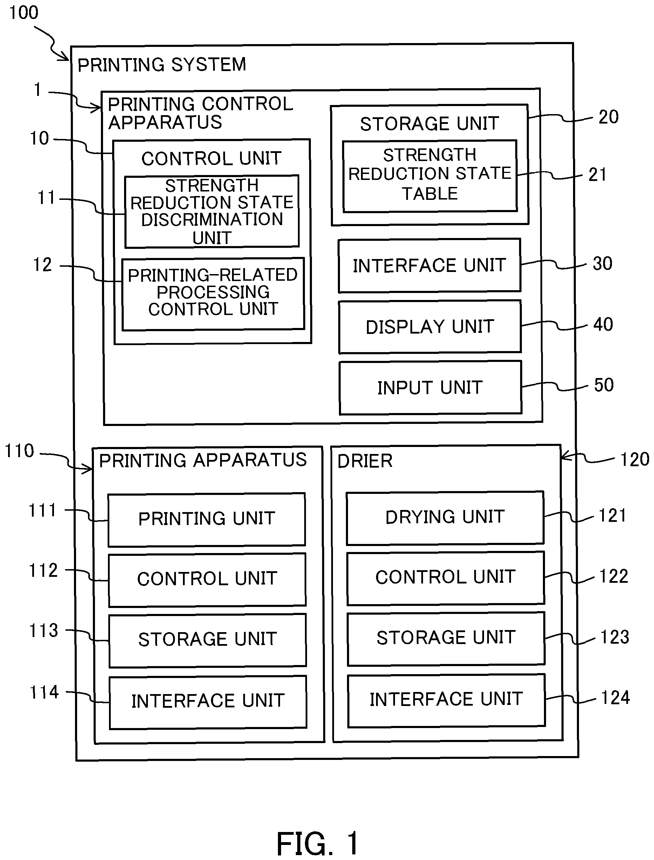

FIG. 1 is a block diagram illustrating a configuration of a printing system 100 including a printing control apparatus 1 according to the one embodiment.

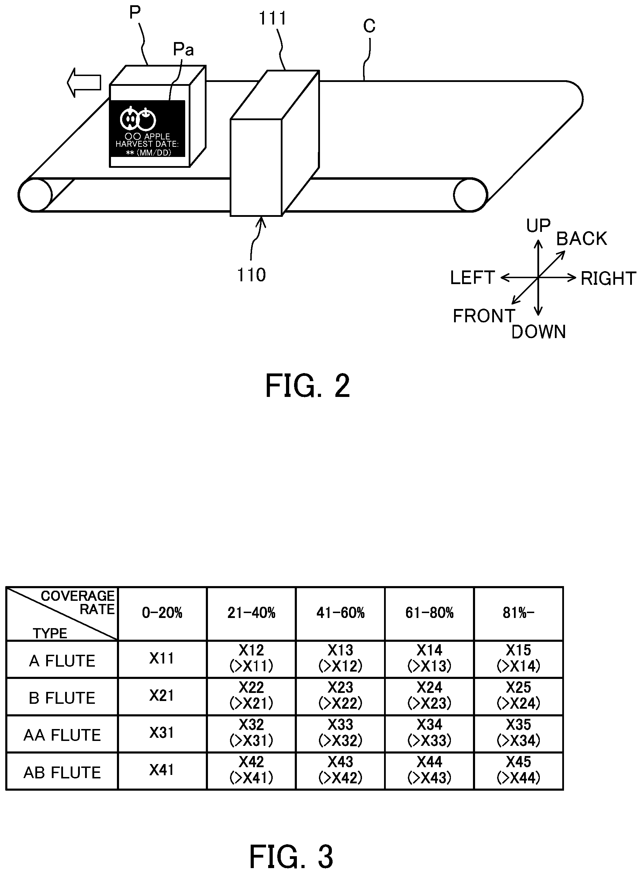

FIG. 2 is a perspective view for explaining printing on a packaging material P.

The printing system 100 illustrated in FIG. 1 includes a printing control apparatus 1, a printing apparatus 110, and a dryer 120.

The printing control apparatus 1 includes a control unit 10, a storage unit 20, an interface unit 30, a display unit 40, and an input unit 50. The printing control apparatus 1 is, for example, an apparatus that executes a printer driver, such as a dedicated terminal for controlling printing of the printing apparatus 110 or a user terminal that performs a printing instruction to the printing apparatus 110.

The control unit 10 includes, for example, one or more processors (such as a Central Processing Unit (CPU)) that function as an arithmetic processing apparatus that controls the operation of each unit of the printing control apparatus 1, the printing apparatus 110, and the dryer 120. This processor functions as, for example, a strength reduction state discrimination unit 11 and a printing-related processing control unit 12 by reading and executing a predetermined program from the storage unit 20 or from a storage medium (non-transitory computer-readable recording medium) attachable to and detachable from the printing control apparatus 1. In this manner, the control unit 10 (or the printing control apparatus 1) functions as an example of a computer that executes a program.

The strength reduction state discrimination unit 11 discriminates a strength reduction state of the packaging material P attributed to printing based on the amount of ink used by a printing unit 111 of the printing apparatus 110 for the printing on the packaging material P. Since the amount of ink used corresponds to a coverage rate, for example, one or more of a coverage rate in the entire printing region, a coverage rate in a specific portion (four corner portions of the packaging material P, a ridge portion connecting the two corners, or the like), a coverage rate obtained by weighting the specific portion, a coverage rate per specified area, and the like may be considered. In addition, the strength reduction state is a state represented by whether or not the strength (for example, compressive strength) of the packaging material P is reduced below a specified standard (reduced state or non-reduced state), a state represented by a numerical value such as a strength reduction rate, or the like. The packaging material P is, for example, a paper box such as a cardboard box having a rectangular parallelepiped shape, or a paper bag such as an envelope having a rectangular shape. For this reason, when printing is performed on the paper packaging material P using ink having a large moisture content such as water-based ink, the ink penetrates into the packaging material P, reducing the strength of the packaging material P. In particular, when the strength of the corner portion, the ridge portion, or the like of the packaging material P is reduced, the packaging material P is more likely to be crushed.

The strength reduction state discrimination unit 11 may discriminate the strength reduction state based on not only the amount of ink used but also parameters including at least one of the type of the packaging material P (for example, structure of a cardboard box, such as A flute, B flute, AA flute, and AB flute, material, or the like), the size and shape of the packaging material P, the area of the printing region, the type of ink (moisture content or the like), and the time until the next process after printing (process at which a force of a cargo or the like is applied).

The printing-related processing control unit 12 performs printing-related processing related to printing on the packaging material P based on the strength reduction state discriminated by the strength reduction state discrimination unit 11. The printing-related processing is not particularly limited as long as it is processing related to printing, and includes, for example, at least one of processing of changing a printing content Pa of the packaging material P, processing of controlling a notification to a user on the strength reduction state attributed to printing, processing of controlling the dryer 120 after printing, determining time for natural drying after printing (such as the time until a process at which a force of a cargo or the like is applied after printing), and processing of determining the necessity of a recommendation of drying using the dryer 120 or natural drying. In addition, the printing-related processing may be another processing such as controlling the printing apparatus 110.

The storage unit 20 includes, for example, a memory such as a Read Only Memory (ROM) that is a read-only semiconductor memory in which a predetermined control program is recorded in advance, a Random Access Memory (RAM) that is a semiconductor memory that is used as a working storage area as necessary when the processor executes various control programs and is writable and readable at any time, a hard disk device, and the like.

The storage unit 20 stores, as a strength reduction state table 21, correspondence relation information representing a correspondence relation between parameters including at least the amount of ink used and the type of the packaging material P, and the strength reduction state. The storage unit 20 functions as a strength reduction state database by storing the strength reduction state table 21.

As illustrated in FIG. 3, for example, the amount of ink used is divided into five coverage rates (0 to 20%, 21 to 40%, 41 to 60%, 61 to 80%, 81% and more) in the entire printing area, and the type of the packaging material P is divided into four flutes such as A flute, B flute, AA flute, and AB flute, and reduction rates (X11 to X15, X21 to X25, X31 to X35, and X41 to X45) are allocated to each of the flutes as the strength reduction state. These reduction rates may be defined for each amount of ink used and for each type of the packaging material P, for example, by performing a compression test specified by a standard such as Japanese Industrial Standards (JIS). As illustrated in FIG. 3, the higher the coverage rate is, the more likely ink is to penetrate into the packaging material P, and thus the strength reduction rate of the packaging material P increases. Note that the correspondence relation information of the strength reduction state table 21 is not limited to the amount of ink used and the type of the packaging material P as in the case where the strength reduction state discrimination unit 11 discriminates the strength reduction state of the packaging material P as described above, and may be information representing the correspondence relation between a parameter further including at least one of the size or shape of the packaging material P, the area of the printing region, the type of ink

(moisture content or the like), and the time until the next process after printing (process at which a force of a cargo or the like is applied), and the strength reduction state. In addition, the strength reduction rate is not divided into, for example, five for each coverage rate, and may be a value that varies in proportion to the coverage rate.

The interface unit 30 transmits and receives various types of information to and from an external device such as the printing apparatus 110 and the dryer 120. The display unit 40 is a display that displays various types of information. The display unit 40 functions as an example of a notification unit that performs a notification to the user. The notification unit may be a voice output unit that outputs a voice. The input unit 50 is a keyboard, a mouse, and the like that receives inputs of various types of information. In a case where the display unit 40 includes a touch panel, the touch panel functions as the input unit 50.

The printing apparatus 110 includes the printing unit 111, a control unit 112, a storage unit 113, and an interface unit 114.

As illustrated in FIG. 2, the printing unit 111 prints the printing content Pa on a side surface of the packaging material P transported on a conveyor C in a lateral direction. Here, the lateral direction is a direction crossing a vertical direction and a transportation direction of the packaging material P (the left direction in FIG. 2). The printing unit 111 ejects, for example, inks of a plurality of colors such as black, cyan, magenta, and yellow using an inkjet method.

The printing content Pa is, for example, a printing image of only the background portion with the region such as characters including "∘∘ apple" and "harvest date **(MM/DD)" (variable printing for *) and the pattern of two apples remaining open. The coverage rate may exceed 100% when most of the printing region is printed with inks of a plurality of colors, such as when the background portion is printed with inks of the plurality of colors, and in other cases.

The control unit 112 includes a processor (for example, a CPU) functioning as an arithmetic processing device that controls the operation of the entire printing apparatus 110. This processor, for example, reads and executes a predetermined program from the storage unit 113 or from a storage medium (non-transitory computer-readable recording medium) attachable to and detachable from the printing apparatus 110. In a case where the control unit 112 functions as the above-described strength reduction state discrimination unit 11 and printing-related processing control unit 12, the printing apparatus 110 itself functions as the printing control apparatus.

The storage unit 113 includes, for example, a memory such as a ROM that is a read-only semiconductor memory in which a predetermined control program is recorded in advance, and a RAM that is a semiconductor memory that is used as a working storage area as necessary when the processor executes various control programs and is writable and readable at any time.

The interface unit 114 transmits and receives various types of information to and from the external device such as the printing control apparatus 1.

The dryer 120 includes a drying unit 121, a control unit 122, a storage unit 123, and an interface unit 124.

The drying unit 121 dries the packaging material P, for example, by blowing warm air for a specified time period to the printing region of the packaging material P after printing by the printing apparatus 110. In a case where the drying unit 121 is integrally disposed inside the printing apparatus 110 or the like, the drying unit 121 itself in the printing apparatus 110 functions as the dryer.

The control unit 122 includes a processor (for example, a CPU) functioning as an arithmetic processing device that controls the operation of the entire dryer 120. The storage unit 123 includes, for example, a memory such as a ROM that is a read-only semiconductor memory in which a predetermined control program is recorded in advance, and a RAM that is a semiconductor memory that is used as a working storage area as necessary when the processor executes various control programs and is writable and readable at any time. The interface unit 124 transmits and receives various types of information to and from the external device such as the printing control apparatus 1.

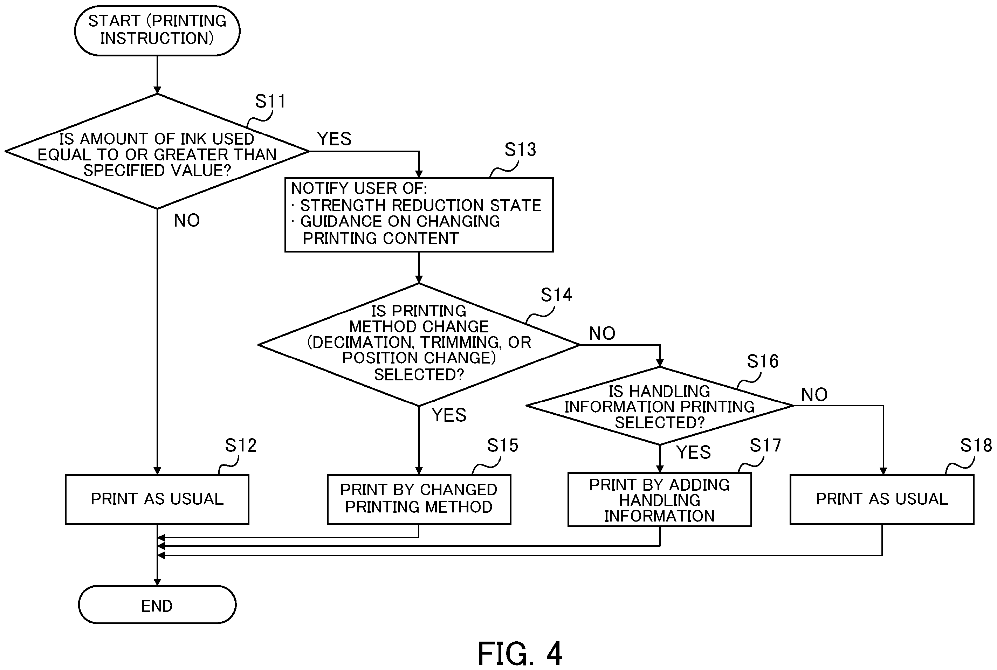

Next, with reference to FIGS. 4 to 5E, the printing control method according to the present embodiment will be described while omitting matters overlapping with the above description.

Processing illustrated in FIG. 4 is performed by the control unit 10 of the printing control apparatus 1, for example, based on the printing instruction (printing job transmission or the like) of the printing control apparatus 1 or the user terminal.

First, the strength reduction state discrimination unit 11 acquires the printing content Pa to be printed on the packaging material P, and discriminates the strength reduction state of the packaging material P attributed to printing, for example, based on whether or not the amount of ink used for printing on the packaging material P is equal to or greater than a specified value (step S11). This printing content Pa corresponds to, for example, a printing setting condition, and the coverage rate, the amount of ink used, and the like can be calculated from the printing setting condition. Here, the specified amount of ink used is, for example, an arbitrary coverage rate (for example, a value such as 81% or 100%) on the side surface (surface on which printing is to be performed) of the packaging material P. The strength reduction state discrimination unit 11 may discriminate the strength reduction state with reference to the strength reduction state table 21 described above.

When the amount of ink used is not equal to or greater than the specified value (step S11: NO), the printing-related processing control unit 12 controls the printing unit 111 to print the printing content Pa as usual (step S12), and then the processing illustrated in FIG. 4 ends.

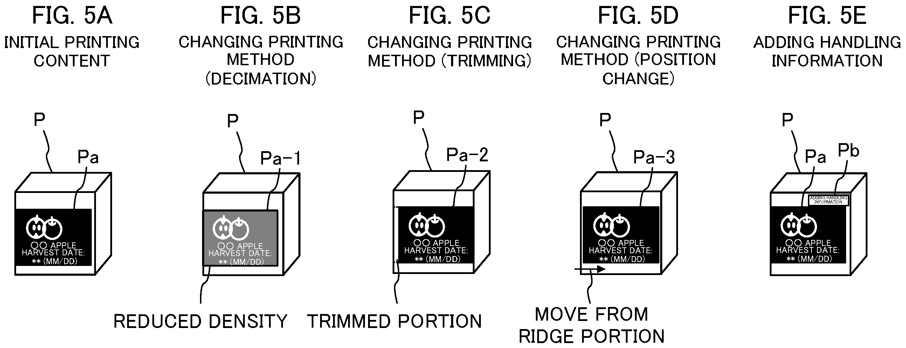

When the amount of ink used is equal to or greater than the specified value (step S11: YES), the printing-related processing control unit 12 performs display control of the display unit 40 to notify the user of the strength reduction state (for example, that fact that the strength of the packaging material P is in a reduced state) and a guidance on changing the printing content Pa (step S13). The guidance on changing the printing content Pa is, for example, a guidance on changing a printing method from the initial printing content Pa illustrated in FIG. 5A or the like, such as decimation to a printing content Pa-1 with the print density reduced as illustrated in FIG. 5B (for example, decimating the coverage rate such as decimating print dots, decimating the number of ejection drops of a nozzle, or the like), trimming to a printing content Pa-2 with a region (trimmed portion) of a specific portion (for example, the vicinity of the ridge portion) deleted as illustrated in FIG. 5C, changing a printing position (a printing content Pa-3) by moving from a specific portion (for example, the vicinity of the ridge portion) as illustrated in FIG. 5D, and reducing the size of the printing content Pa (not illustrated). Alternatively, as illustrated in FIG. 5E, the guidance on changing the printing content Pa is a guidance on performing additional printing of handling information Pb such as "Handle with care" (or "Do not stack") on the packaging material P (on the upper right corner, left corner, or the like of the surface on which printing is to be performed). Note that the guidance is performed, for example, by presenting a screen on the display unit 40.

Then, when the change in the printing method (decimation, trimming, or position change) is selected at the input unit 50 by the user who has checked the guidance on changing the printing content Pa (step S14: YES) (or according to presetting), the printing-related processing control unit 12 controls the printing unit 111 to perform printing using the changed printing method (step S15), and then the processing illustrated in FIG. 4 ends.

On the other hand, when the change in the printing method is not selected by the user (step S14: NO), and the addition of the handling information Pb is selected at the input unit 50 by the user who has checked the guidance on adding the handling information Pb (or according to presetting) (step S16: YES), the printing-related processing control unit 12 controls the printing unit 111 to perform printing by adding the handling information Pb (step S17), and then the processing illustrated in FIG. 4 ends.

When the addition of the handling information Pb is not selected by the user (step S16: NO), the printing unit 111 is controlled to print the printing content Pa as usual (step S18), and then the processing illustrated in FIG. 4 ends.

In the above description, the printing-related processing control unit 12 performs only one of processing of changing the printing method (step S15) and processing of adding the handling information Pb (step S17) as the change in the printing content Pa. However, both the processing of changing the printing method and the processing of adding the handling information Pb may be performed when both are selected by the user. In addition, the processing in the flowchart of FIG. 4 (the discrimination of the strength reduction state and the printing-related processing) may be performed, for example, based on the user's setting under a specific condition such as a case where the packaging material P contains a heavy object.

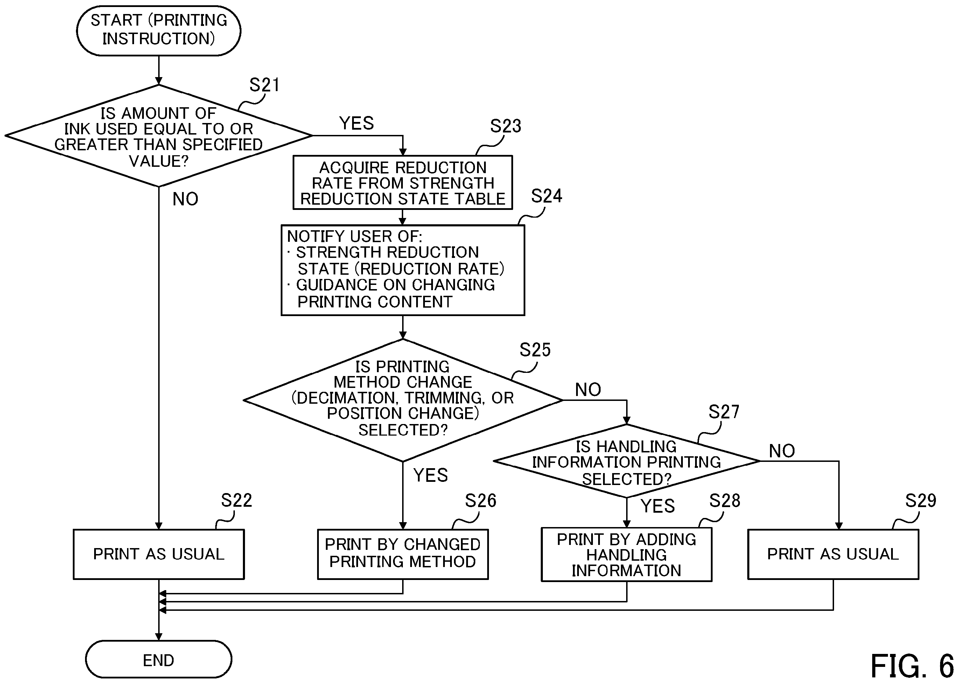

FIG. 6 is a flowchart for explaining a printing control method according to a first modification of the present embodiment.

The flowchart illustrated in FIG. 6 can be considered to be the same as the flowchart illustrated in FIG. 4 except that processing of acquiring the strength reduction rate of the packaging material P attributed to printing (step S23) and notifying the user of the reduction rate (step S24) are performed. For this reason, the description of the processing of steps S21, S22, and S25 to S29 illustrated in FIG. 6, which can be considered to be the same as the processing of steps S11, S12, and S14 to S18 illustrated in FIG. 4, will be omitted.

When the strength reduction state discrimination unit 11 determines that the amount of ink used is equal to or greater than the specified value (step S21: YES), the printing-related processing control unit 12 acquires the strength reduction rate from the strength reduction state table 21 based on the amount of ink used, the type of the packaging material P, and the like described above (step S23).

The printing-related processing control unit 12 performs the display control of the display unit 40 to notify the user of the strength reduction rate of the packaging material P and the guidance on changing the printing content Pa (step S24). The printing-related processing control unit 12 may perform the change and adjustment in the printing method such as the amount of decimation, the amount of trimming, and the movement amount of the printing content Pa, adjustment in the content of the handling information Pb, and the like based on the acquired strength reduction rate. The change and adjustment in the printing method includes, for example, increasing the amount of decimation or the amount of trimming, or movement to increase the distance from the specific portion such as the corner portion or the ridge portion as the strength of the packaging material P is reduced. In addition, the adjustment in the content of the handling information Pb includes, for example, increasing the size of the handling information Pb and changing the content of the handling information Pb as the strength of the packaging material P is reduced.

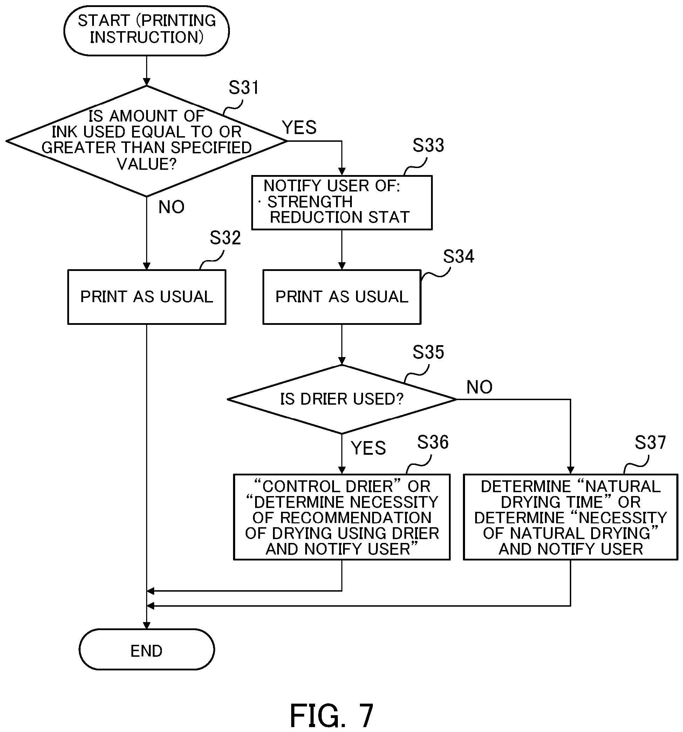

FIG. 7 is a flowchart for explaining a printing control method according to a second modification of the present embodiment. Note that the flowchart illustrated in FIG. 7 is processing in a case where the packaging material P after printing is dried by the dryer 120 or naturally dried.

Processing illustrated in FIG. 7 is also performed by the control unit 10 of the printing control apparatus 1, for example, based on the printing instruction of the printing control apparatus 1 or the user terminal.

First, the strength reduction state discrimination unit 11 acquires the printing content Pa to be printed on the packaging material P, and discriminates the strength reduction state of the packaging material P attributed to printing, for example, based on whether or not the amount of ink used for printing on the packaging material P is equal to or greater than a specified value (step S31). The processing of step S31 can be considered to be the same as the processing of step S11 illustrated in FIG. 4.

When the amount of ink used is not equal to or greater than the specified value (step S31: NO), the printing-related processing control unit 12 controls the printing unit 111 to print the printing content Pa as usual (step S32), and then the processing illustrated in FIG. 7 ends.

When the amount of ink used is equal to or greater than the specified value (step S31: YES), the printing-related processing control unit 12 performs display control of the display unit 40 to notify the user of the strength reduction state (for example, that fact that the strength of the packaging material P is in a reduced state) (step S33).

Then, the printing-related processing control unit 12 controls the printing unit 111 to print the printing content Pa as usual (step S34). Alternatively, the printing-related processing control unit 12 may also notify the user of the guidance on changing the printing content Pa as in step S13 illustrated in FIG. 4, and perform the processing of changing the printing content Pa (steps S15 and S17).

Next, the printing-related processing control unit 12 determines whether the setting to use the dryer 120 has been made (step S35). If the setting to use the dryer 120 has been made (step S35: YES), the printing-related processing control unit controls the dryer 120 or determines the necessity of the recommendation of drying using the dryer 120, and causes the display unit 40 to notify the user of the determined necessity (step S36). Then, the processing illustrated in FIG. 7 ends. In the control of the dryer 120, for example, the dryer 120 may be controlled to dry only the packaging material P in the strength reduction state, or the dryer 120 may be controlled to increase the drying time and the drying air volume for the packaging material P in the strength reduction state. The recommendation of drying using the dryer 120 is, for example, a recommendation to the user to set the packaging material P in the dryer 120.

If the setting to use the dryer 120 has not been made (step S35: NO), for example, the printing-related processing control unit 12 determines the natural drying time so as to increase the natural drying time for the packaging material P in the strength reduction state (the time until the next process at which the force of a cargo or the like is applied after printing), or determines that the natural drying is necessary only for the packaging material P in the strength reduction state, and causes the display unit 40 to notify the user of the determined natural drying time or necessity of the natural drying (step S37). Then, the processing illustrated in FIG. 7 ends.

The drying time of the dryer 120 and the drying time of natural drying may be determined based on the moisture content of the object (packaging material P) measured by a known measuring instrument.

Here, regarding the storage unit 20 of the printing control apparatus 1 illustrated in FIG. 1 described above, the strength reduction state table 21 is stored in the storage unit 20 of the printing control apparatus 1, but may be stored in a storage device other than the printing control apparatus 1.

In the above description, the printing unit 111 ejects inks of a plurality of colors, but printing may be performed using ink of a single color. In addition, the printing method of the printing unit 111 may be a printing method using ink other than the inkjet method. Furthermore, the printing unit 111 performs printing on the packaging material P in the lateral direction, but the printing direction of the printing unit 111 may be another direction such as a vertically downward direction.

The printing control apparatus 1 according to the present embodiment described above includes the strength reduction state discrimination unit 11 (step S11) that discriminates the strength reduction state of the packaging material P attributed to printing based on the amount of ink used by the printing unit 111 for printing on the packaging material P, and the printing-related processing control unit 12 that performs the printing-related processing (changing the printing content Pa (steps S15 and S17), controlling a notification to the user on the strength reduction state attributed to printing (step S13), controlling the dryer 120, and the like) related to the printing on the packaging material P, based on the strength reduction state.

The printing control method according to the present embodiment is a printing control method performed by a computer (for example, the control unit 10 or the printing control apparatus 1), and includes determining the strength reduction state of the packaging material P attributed to printing based on the amount of ink used by the printing unit 111 for printing on the packaging material P (step S11), and performing printing-related processing (steps S13, S15, and S17) related to the printing on the packaging material P based on the strength reduction state.

The program according to the present embodiment is a program that causes a computer (for example, the control unit 10 or the printing control apparatus 1) to implement a function of determining the strength reduction state of the packaging material P attributed to printing based on the amount of ink used by the printing unit 111 for printing on the packaging material P (step S11), and a function of performing printing-related processing (steps S13, S15, and S17) related to the printing on the packaging material P based on the strength reduction state.

In the printing control apparatus 1, the printing control method, and the program, for example, processing such as changing the printing content Pa of the packaging material P, controlling a notification to the user on the strength reduction state attributed to printing, controlling the dryer 120 after printing, determining the natural drying time after printing, and determining the necessity of drying using the dryer 120 or natural drying, based on the strength reduction state of the packaging material P attributed to printing. Therefore, according to the present embodiment, it is possible to cope with a reduction in strength of the packaging material P attributed to printing using ink. As a result, at the time of transportation, packaging, or the like requiring the compressive strength, it is possible to prevent the occurrence of damage or contamination of the content stored in the packaging material P when the packaging material P with a reduced strength is crushed, or the occurrence of the similar damage or contamination of the content when the packaging material P stacked on the crushed packaging material P fall.

In addition, in the present embodiment, the printing-related processing controlled by the printing-related processing control unit 12 includes the processing of changing the printing content Pa of the packaging material P on which printing is to be performed by the printing unit 111, and the printing-related processing control unit 12 performs the processing of changing the printing content Pa based on the strength reduction state. For example, changing the printing content Pa includes at least one of the processing of changing the printing method including at least one of decimating the printing content Pa, trimming the printing content Pa, and changing the position of the printing content Pa, and the processing of adding the handling information Pb of the packaging material P. The printing-related processing control unit 12 receives the user's selection of at least one of processing of changing the printing method and processing of adding the handling information Pb, and performs processing of the received selection.

For this reason it is possible to reduce the amount of ink used by decimating or trimming the printing content Pa according to the user's request. In addition, by trimming or changing the position of the printing content Pa, it is possible to move the printing position away from a portion where the strength is to be secured, such as the corner portion or the ridge portion of the packaging material P. As a result, it is possible to suppress the reduction in strength of the packaging material P. Furthermore, by adding the printing of the handling information Pb according to the user's request, it is possible for a person in charge of handling the packaging material P to carefully handle the packaging material P, thus making it possible to suppress the occurrence of damage and contamination of the content of the packaging material P.

In addition, in the present embodiment, the printing control apparatus 1 further includes the display unit 40 that is an example of a notification unit that performs a notification to the user, the printing-related processing includes processing of controlling the display unit 40 to notify the user of the strength reduction state attributed to printing (step S 13), and the printing-related processing control unit 12 performs the processing of controlling the display unit 40 to notify the user of the strength reduction state based on the strength reduction state.

As a result, it is possible for the user of the printing control apparatus 1 notified of the strength reduction state to cancel printing. In addition, it is possible for the user of the printing control apparatus 1 or the person in charge of handling the packaging material P who is notified of the reduction in strength by the user to carefully handle the packaging material P, thus making it possible to suppress the occurrence of damage and contamination of the content.

In addition, in the present embodiment, the printing-related processing includes at least one of the processing of controlling the dryer 120 that dries the packaging material P after printing by the printing unit 111 (step S36), processing of determining the time for natural drying of the packaging material P after printing by the printing unit 111 (step S37), and processing of determining the necessity of the recommendation of drying using the dryer 120 or natural drying (steps S36 and S37), and the printing-related processing control unit 12 performs at least one of processing of controlling the dryer 120 (step S36), processing of determining the time for natural drying (step S37), and processing of determining the necessity of the recommendation (steps S36 and S37), based on the strength reduction state.

As a result, when the packaging material P needs to be dried, it is possible to remove moisture that has penetrated into the packaging material P due to printing from the packaging material P. Therefore, it is possible to suppress the reduction in strength of the packaging material P. In addition, when the packaging material P does not need to be dried, it is possible to omit drying or shorten the drying time.

In addition, in the present embodiment, the strength reduction state discrimination unit 11 discriminates the strength reduction state of the packaging material P with reference to the strength reduction state table 21 that is an example of the correspondence relation information representing the correspondence relation between the parameters including at least the amount of ink used and the type of the packaging material P, and the strength reduction state.

As a result, it is possible to discriminate the strength reduction state with simple processing of referring to the strength reduction state table 21. In addition, since it is easy to include information such as the strength reduction rate as the strength reduction state in the strength reduction state table 21, it is also possible to notify the user of this information and to use this information to change the printing content Pa.

The present invention is not limited to the above-described embodiment as it is, and the constituent elements can be modified and embodied without departing from the gist thereof at the implementation stage. In addition, various inventions can be formed by appropriately combining a plurality of components disclosed in the above-described embodiment. For example, all the constituent elements shown in the embodiment may be appropriately combined. It is a matter of course that various modifications and applications can be made without departing from the gist of the invention. Hereinafter, some inventions described in the specification of the present application will be additionally described.

### [Supplementary note 1]

A printing control apparatus comprising:
a strength reduction state discrimination unit that discriminates a strength reduction state of a packaging material attributed to printing based on the amount of ink used by a printing unit for the printing on the packaging material; and
a printing-related processing control unit that performs printing-related processing related to the printing on the packaging material based on the strength reduction state.

### [Supplementary note 2]

The printing control apparatus according to supplementary note 1, wherein
the printing-related processing includes processing of changing a printing content of the packaging material on which printing is to be performed by the printing unit, and
the printing-related processing control unit performs the processing of changing the printing content based on the strength reduction state.

### [Supplementary note 3]

The printing control apparatus according to supplementary note 2, wherein
changing the printing content includes at least one of processing of changing a printing method including at least one of decimating the printing content, trimming the printing content, and changing a position of the printing content, and processing of adding handling information of the packaging material, and
the printing-related processing control unit receives a user's selection of at least one of the processing of changing the printing method and the processing of adding the handling information, and performs processing of the received selection.

### [Supplementary note 4]

The printing control apparatus according to any one of supplementary notes 1 to 3, further comprising
a notification unit that performs a notification to a user, wherein
the printing-related processing includes processing of controlling the notification unit to notify the user of the strength reduction state attributed to the printing, and
the printing-related processing control unit performs the processing of controlling the notification unit to notify the user of the strength reduction state based on the strength reduction state.

### [Supplementary note 5]

The printing control apparatus according to any one of supplementary notes 1 to 4, wherein
the printing-related processing includes at least one of processing of controlling a dryer that dries the packaging material after printing by the printing unit, processing of determining time for natural drying for the packaging material after printing by the printing unit, and processing of determining the necessity of a recommendation of drying using the dryer or the natural drying, and
the printing-related processing control unit performs at least one of the processing of controlling the dryer, the processing of determining the time for the natural drying, and the processing of determining the necessity of the recommendation, based on the strength reduction state.

### [Supplementary note 6]

The printing control apparatus according to any one of supplementary notes 1 to 5, wherein
the strength reduction state discrimination unit discriminates the strength reduction state with reference to correspondence relation information representing a correspondence relation between parameters including at least the amount of ink used and the type of the packaging material, and the strength reduction state.

### [Supplementary note 7]

A printing control method performed by a computer, the method including:
discriminating a strength reduction state of a packaging material attributed to printing based on the amount of ink used by a printing unit for the printing on the packaging material; and
performing printing-related processing related to the printing on the packaging material based on the strength reduction state.

### [Supplementary note 8]

A program causing a computer to implement:
a function to discriminate a strength reduction state of a packaging material attributed to printing based on the amount of ink used by a printing unit for the printing on the packaging material; and
a function to perform printing-related processing related to the printing on the packaging material based on the strength reduction state.

## Claims

1. A printing control apparatus (1) comprising:
a strength reduction state discrimination unit (11) that discriminates a strength reduction state of a packaging material (P) attributed to printing based on the amount of ink used by a printing unit (111) for the printing on the packaging material (P); and
a printing-related processing control unit (12) that performs printing-related processing related to the printing on the packaging material (P) based on the strength reduction state.

2. The printing control apparatus (1) according to claim 1, wherein
the printing-related processing includes processing of changing a printing content (Pa) of the packaging material (P) on which printing is to be performed by the printing unit (111), and
the printing-related processing control unit (12) performs the processing of changing the printing content (Pa) based on the strength reduction state.

3. The printing control apparatus (1) according to claim 2, wherein
changing the printing content (Pa) includes at least one of processing of changing a printing method including at least one of decimating the printing content (Pa), trimming the printing content (Pa), and changing a position of the printing content (Pa), and processing of adding handling information (Pb) of the packaging material (P), and
the printing-related processing control unit (12) receives a user's selection of at least one of the processing of changing the printing method and the processing of adding the handling information (Pb), and performs processing of the received selection.

4. The printing control apparatus (1) according to any one of claims 1 to 3, further comprising
a notification unit (40) that performs a notification to a user, wherein
the printing-related processing includes processing of controlling the notification unit (40) to notify the user of the strength reduction state attributed to the printing, and
the printing-related processing control unit (12) performs the processing of controlling the notification unit (40) to notify the user of the strength reduction state based on the strength reduction state.

5. The printing control apparatus (1) according to any one of claims 1 to 4, wherein
the printing-related processing includes at least one of processing of controlling a dryer (120) that dries the packaging material (P) after printing by the printing unit (111), processing of determining time for natural drying for the packaging material (P) after printing by the printing unit (111), and processing of determining the necessity of a recommendation of drying using the dryer (120) or the natural drying, and
the printing-related processing control unit (12) performs at least one of the processing of controlling the dryer (120), the processing of determining the time for the natural drying, and the processing of determining the necessity of the recommendation, based on the strength reduction state.

6. The printing control apparatus (1) according to any one of claims 1 to 5, wherein the strength reduction state discrimination unit (11) discriminates the strength reduction state with reference to correspondence relation information (21) representing a correspondence relation between parameters including at least the amount of ink used and the type of the packaging material (P), and the strength reduction state.

7. A printing control method performed by a computer (10), the method comprising:
discriminating (S11) a strength reduction state of a packaging material (P) attributed to printing based on the amount of ink used by a printing unit (111) for the printing on the packaging material (P); and
performing printing-related processing (S13, S15, S17) related to the printing on the packaging material (P) based on the strength reduction state.

8. A program causing a computer (10) to implement:
a function (S11) to discriminate a strength reduction state of a packaging material (P) attributed to printing based on the amount of ink used by a printing unit (111) for the printing on the packaging material (P); and
a function to perform printing-related processing (S13, S15, S17) related to the printing on the packaging material (P) based on the strength reduction state.
